# EUROPÄISCHE PATENTSCHRIFT

(11) **EP 1 026 801 B1**
(45) Veröffentlichungstag und Bekanntmachung des Hinweises auf die Patenterteilung: **08.10.2008**
(21) Anmeldenummer: 00250035.3
(22) Anmeldetag: 03.02.2000
(51) Int. Cl.: H02B 11/04

(54) **Trennkontaktblock für Einschub-Leistungsschalter**
Break contact block for drawer type switchgear
Bloc de contacts mobile pour interrupteur de puissance extractible

(30) Priorität: 05.02.1999 DE 19906176
(43) Veröffentlichungstag der Anmeldung: 09.08.2000
(73) Patentinhaber: SIEMENS AKTIENGESELLSCHAFT, 80333 München (DE)
(72) Erfinder: Deylitz, Erhard, 10405 Berlin (DE); Marek, Katharina, 16341 Zepernick (DE)

(56) Entgegenhaltungen:
- US-A- 4 555 604

## Beschreibung

Die Erfindung betrifft einen Trennkontaktblock zur Verbindung beziehungsweise Trennung relativ zueinander bewegbarer Stromschienen, bestehend aus einem Tragrahmen und einem an diesem Tragrahmen befestigten Lagerstück, an dem parallel zueinander und relativ zueinander bewegbar brückenartige Kontaktlamellen angeordnet sind, die an ihren Enden Kontaktflächen zur Anlage an den zu verbindenden oder zu trennenden Stromschienen besitzen und die durch am Tragrahmen abgestützte, die Kontaktlamellen in die Richtung zu ihrer Kontaktseite beaufschlagende Federn gegen die Stromschienen vorgespannt sind, wobei jeweils zwei Kontaktlamellen zur Bildung paralleler Strombahnen einander gegenüberstehend angeordnet sind. Derartige Trennkontaktanordnungen können vorzugsweise in elektrischen Schaltanlagen mit ausfahrbaren Leistungsschaltern Verwendung finden, insbesondere in Niederspannungs-Schaltanlagen.

Diese Trennkontaktblöcke müssen einen hohen Strom führen, sie müssen kurzschlußfest sein und sollen keine hohen Einfahrkräfte aufweisen. Das wird bei einer Grundbauform mit mehreren parallel angeordneten brückenartigen Kontaktlamellen erreicht, die für hohe Nennströme und die Kurzschlußfestigkeit am günstigsten ist.

Die hohe Nennstromtragfähigkeit ergibt sich dadurch, daß mehrere parallele Kontaktlamellen vorgesehen sind, die alle einzeln gefedert sind, wodurch Probleme vermieden werden, die durch Verkantung oder Toleranzen entstehen können weil, jede Kontaktlamelle für sich fest aufliegt. Die hohe Kurzschlußfestigkeit ergibt sich durch die gegenüberstehende symmetrische Bauform weil sich diese Bahnen im Falle eines Kurzschlusses durch die dann auftretenden hohen elektromagnetischen Kräfte gegenseitig anziehen.

Ein gattungsgemäßer Trennkontaktblock ist aus der Druckschrift US 4,555,604 A bekannt. Bei diesem bekannten Trennkontaktblock sind mehrere Lagerstücke in Form von Abstandsstücken vorgesehen, die jeweils zwischen benachbarten der Kontaktlamellen angeordnet und über zwei Bolzen am Tragrahmen gehalten sind. Um die Kontaktlamellen bei demontiertem Trennkontaktblock in einer vorgespannten Stellung auf Abstand zu halten ist zusätzlich zu den Abstandsstücken und den beiden Bolzen auch noch ein Gelenkstab erforderlich, der auch am Tragrahmen gehalten ist.

Aus der Druckschrift EP-B 0 107 611 ist ein Trennkontaktblock bekannt geworden, bei dem ein Gehäuse aus Blechteilen besteht, die miteinander vernietet beziehungsweise verstemmt sind. In diesem Gehäuse sind Kontaktlamellen angeordnet, deren gegenseitiger Abstand durch Abstandsglieder mit zwischen die Kontaktlamellen greifenden Armen aufrechterhalten wird. Je nach der Dicke der zu verbindenden Stromschienen werden daher viele Typen der Trennkontaktblöcke mit unterschiedlichen Gehäusen benötigt, wenn auch die Kontaktlamellen und die Abstandsglieder unverändert verwendbar sind.

Zur Verringerung der Typenvielfalt benötigter Trennkontaktblöcke nach dieser vorgenannten Lösung wird in der DE OS 44 05 900 vorgeschlagen, das Gehäuse mit zwei Gehäusehälften auszubilden, die zur gegenseitigen Anlage bestimmte, mit Durchgangsöffnungen für Verbindungselemente versehene Fußteile besitzen, wobei die Gehäusehälften zur Unterteilung des zur Aufnahme der Kontaktlamellen vorgesehenen Raumes mit zwischenwänden versehen sind. Die zum Trennkontaktblock gehörende feste Stromschiene ist mittels zweier Befestigungswinkel an einem Isolierstoffgehäuse befestigt, das ortsfest in der Schaltanlage zur Aufnahme des Trennkontaktblockes angeordnet ist. Die Unterteilung des Gehäuses des Trennkontaktblockes in Gehäusehälften ermöglicht es zwar, Trennkontaktblöcke für unterschiedlich dicke Stromschienen dadurch zu fertigen, daß die Gehäusehälften im jeweils benötigten Abstand montiert werden, führt aber, ebenso wie die Befestigung mittels der Blechwinkel, zu einem hohen Aufwand an benötigten Einzelteilen und zu einer aufwendigen Befestigung und Montage, verbunden mit einer entsprechend langen Montagezeit.

In der US-Patentschrift 4 486 636 ist ein Trennkontaktblock beschrieben, bei welchem die Kontaktlamellen in der Mitte mittels einer Brücke schwenkbar gehalten werden. Die Kontaktlamellen sind in einem Haltekäfig angeordnet, dessen Seitenteile und Deckel miteinander vernietet sind und werden durch Blattfedern abgefedert. Dieser Trennkontaktblock ist sowohl bezüglich des Material- als auch des Montageaufwandes unbefriedigend.

Zu deren Verringerung wurde in der US-Patentschrift 2 872 659 ein verhältnismäßig materialsparender Trennkontaktblock vorgeschlagen, bei dem die Kontaktlamellen in einem einfachen Blechkäfig gehalten werden, der die Kontaktlamellen erfaßt und gegen eine Verschiebung sichert. Am Blechkäfig sind Blattfedern angeordnet, welche die Kontaktlamellen in die Richtung zur Einschubstromschiene beaufschlagen. Dieser Lamellenblockblock ist jedoch als lager- und montagefähige Baugruppe nur zusammen mit einem bereits damit verbundenen Leiterstück verwendbar, das im Eingriff mit der einen Seite der Kontaktlamellen steht und an dem Blechkäfig mittels Schrauben befestigt ist. Somit ist zwar der Lamellenblock an sich materialarm, aber die damit zwingend verbundene Schiene hebt diesen Vorteil wieder auf.

Eine vom Prinzip her gleichartige Lösung ist in der US-Patentschrift 2 751 471 dargestellt. Auch hier sind die Kontaktlamellen in einem verhältnismäßig materialsparenden und einfach ausgeführten Blechkäfig gehalten, gegen eine Verschiebung gesichert und durch Federn in die Richtung zur Stromschiene beaufschlagt, aber der Blechkäfig ist auch hier durch Befestigungselemente, wie Niete, zwingend mit einem Leiterstück verbunden und somit nicht als selbstständige Baueinheit verfügbar.

Es ist aber wünschenswert, einen solchen Trennkontaktblock als selbstständige Baueinheit zu besitzen, die an einem Montageplatz zusammengestellt und montiert werden kann, um ihn dann bei Bedarf am Schalter oder in der Schaltanlage anzuordnen.

Ein weiterer derartiger Trennkontaktblock ist in der US-Patentschrift 3 201 556 beschrieben. Dieser Trennkontaktblock kann zwar als Baugruppe bei der Montage eines Schalters in der Schaltanlage an der anlagenseitigen Stromschiene montiert werden, aber diese Montage ist insofern sehr aufwendig, als in dieser Stromschiene eine Bohrung vorgesehen sein muß, durch welche ein zusätzliches Befestigungselement zur Arretierung der Trennkontaktanordnung an der Stromschiene eingeführt werden kann. Darüber hinaus ist sowohl der Fertigungsaufwand, als auch der Materialaufwand hierdurch entsprechend groß.

Eine von der Funktionsweise gleichartige Lösung ist in der US-Patentschrift 3 427 419 dargestellt. Diese Anordnung weist ebenfalls einen materialsparenden einfachen Blechkäfig auf, aber auch bei ihr muß die anlagenseitige Stromschiene mit Befestigungselementen, hier zum Beispiel Aussparungen, versehen werden und für die Sicherung der Kontaktlamellen gegen eine Verschiebung und für die Federbeaufschlagung der Kontaktlamellen ist eine Vielzahl von teilweise komplizierten Kleinteilen erforderlich.

Die Aufgabe der Erfindung besteht folglich darin, einen Trennkontaktblock vorzuschlagen, der nur eine geringe Anzahl von einfachen Teilen und somit geringe Herstellungskosten aufweist sowie eine unkomplizierte Lagerhaltung und Montage ermöglicht.

Diese Aufgabe wird bei einem Trennkontaktblock mit den Merkmalen des Oberbegriffes des Patentanspruches 1 (US 4,555,604 A) dadurch gelöst, dass die Kontaktlamellen in einer Symmetrieachse von den Federn beaufschlagt sind und dass das Lagerstück ein Mittelteil und zwei schräg abgewinkelte Arme aufweist und mit Fenstern versehen ist, wobei die Fenster jeweils von einer Kante am Mittelteil, einer Kante an einem Schenkelende einer der abgewinkelten Arme und zwei Seitenwänden gebildet sind und wobei mehrere der Kontaktlamellen jeweils als ein Paket derart in eines der Fenster eingeführt sind, dass die Kante am Mittelteil ein asymmetrisch gelegenes Schwenklager für die Kontaktlamellen, die Kante an den Schenkelenden der abgewinkelten Arme eine Lagerkante zur Begrenzung des Schwenkwinkels der Kontaktlamellen und die Seitenwände seitliche Führungen der Kontaktlamellen bilden.

Der Tragrahmen ist zur Sicherung der Kontaktkraftfedern mit Zapfen versehen, über welche die als Schraubenfedern ausgebildeten Kontaktkraftfedern gesteckt und somit gegen ein Verrutschen oder Lösen gesichert sind.

Der Tragrahmen weist zur Befestigung des Trennkontaktblockes im Einschubrahmen der Schaltanlage Haltewinkel auf, mittels welcher er hinter Befestigungselemente dieses Einschubrahmens eingehakt wird.

Das Lagerstück ist mit dem rahmenartigen Tragrahmen vernietet oder verstemmt.

Die Kontaktkraftfedern sind vorzugsweise als Schraubenfedern ausgebildet.
Dabei ist es vorteilhaft, daß jede Kontaktkraftfeder je zwei nebeneinander angeordnete Kontaktlamellen beaufschlagt.

Die Kontaktlamellen sind auf ihrer Kontaktseite mit Ausnehmungen versehen die außerhalb der Symmetrieachse der Kontaktlamellen vorgesehen sind und eine asymmetrische Lagerung im Lagerstück gewährleisten.

Auf ihrer Rückseite weisen die Kontaktlamellen mittig in ihrer Symmetrieachse angeordnete Ausnehmungen zur Aufnahme und Führung der als Schraubenfedern ausgebildeten Kontaktkraftfedern auf.

Die Erfindung wird im folgenden anhand eines in den Figuren dargestellten bevorzugten Ausführungsbeispiels näher erläutert.

Die Fig.1 zeigt schematisch die Vorderansicht einer Ausführungsform des erfindungsgemäßen Trennkontaktblocks.

Die Fig.2 zeigt schematisch, teilweise im Schnitt entlang der Schnittlinie A - B in der Fig.1, die Seitenansicht der Ausführungsform des erfindungsgemäßen Trennkontaktblocks gemäß der Fig.1.

Die Fig.3 zeigt schematisch die räumliche Anordnung der Trennkontaktblöcke für die Anschlußstromschiene und die Abgangsstromschiene für einen Leistungschalter in einer Niederspannungs-Schaltanlage.

Die Fig.4 zeigt schematisch eine mögliche vorteilhafte Form einer Kontaktlamelle in der Seitenansicht.

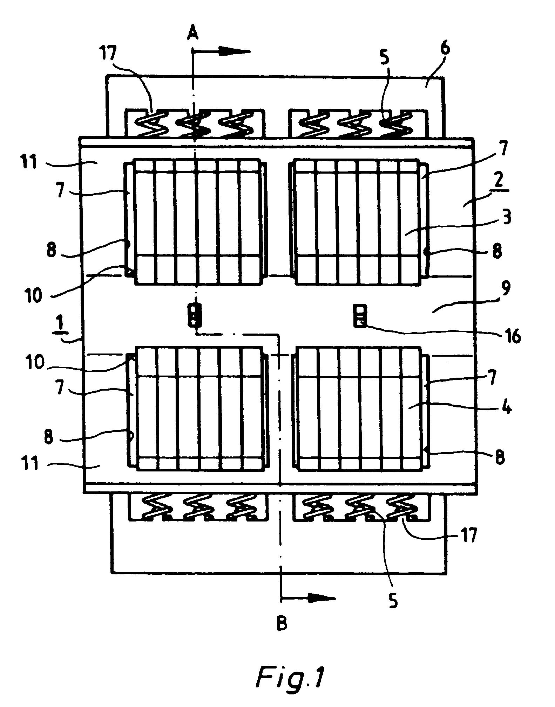

Die Fig.1 zeigt die Vorderansicht einer Ausführungsform des erfindungsgemäßen Trennkontaktblocks 1. Er besteht aus einem zweifach schräg abgewinkelten Lagerstück 2, das ein asymmetrisch gelegenes Schwenklager der Kontaktlamellen 3 und 4 bildet, den Schwenkwinkel der Kontaktlamellen 3 und 4 begrenzt und eine seitliche Abstützung derselben gewährleistet. Die gewünschte Kontaktkraft wird durch als Schraubenfedern ausgebildete Kontaktkraftfedern 5 erreicht, die an dem Tragrahmen 6 abgestützt sind und jeweils zwei Kontaktlamellen 3 und 4 erfassen. Das Lagerstück 2 ist mit dem rahmenartigen Tragrahmen 6 vernietet oder verstemmt.

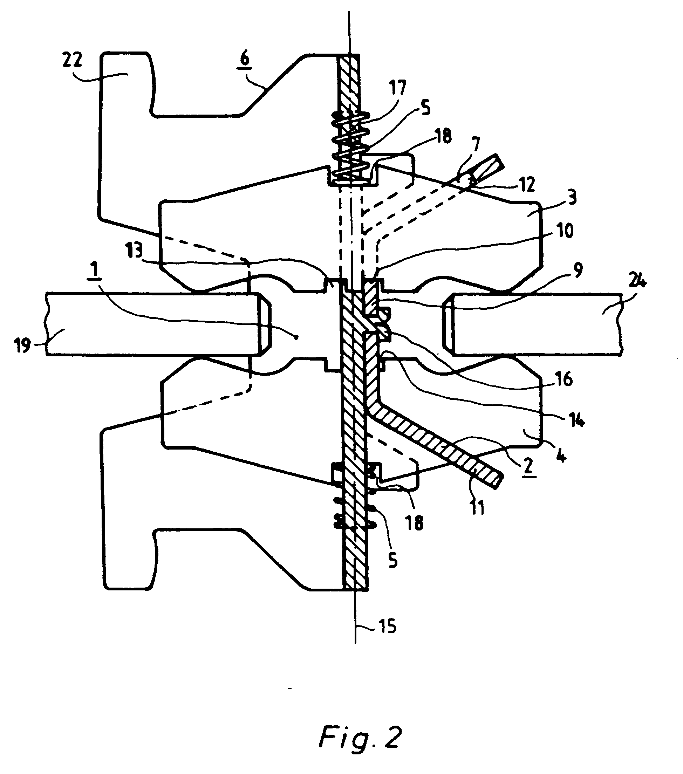

In der Fig. 2 ist, in einer teilweisen Schnittdarstellung entlang der Schnittlinie A - B in der Fig.1, die Anordnung der Funktionselemente des Kontaktblocks 1 dargestellt. Am Tragrahmen 6 ist vorzugsweise durch Taumelnietung 16 das Lagerstück 2 befestigt. Dieses weist Fenster 7 auf, durch welche die Kontaktlamellen 3 und 4 geführt sind. Dabei bilden die Seitenwände 8 der Fenster 7 eine seitliche Führung der Kontaktlamellen 3 und 4 und das Mittelteil 9 des Lagerstücks 2 dient als Schwenklager 10 für die Kontaktlamellen 3 und 4. Zur definierten asymmetrischen Lagerung der Kontaktlamellen 3 und 4 sind diese auf ihrer Kontaktseite mit Ausnehmungen 13 und 14 versehen, welche außerhalb der Symmetrieachse 15 der Kontaktlamellen 3 und 4 vorgesehen sind und die Kanten des Mittelteils 9 umgreifen. Durch die abgewinkelten Arme 11 des Lagerstücks 2 wird mittels der Lagerkanten 12 eine Begrenzung des Schwenkwinkels der Kontaktlamellen 3 und 4 bewirkt. Die erforderliche Kontaktkraft der Kontaktlamellen 3 und 4 wird durch als Schraubenfedern ausgebildete Kontaktkraftfedern 5 erreicht, die am Tragrahmen 6 abgestützt sind und jeweils zwei nebeneinanderliegende Kontaktlamellen 3 oder 4 erfassen. Zur Sicherung der Kontaktkraftfedern 5 sind am Tragrahmen Zapfen 17 vorgesehen, über welche die als Schraubenfedern ausgebildeten Kontaktkraftfedern 5 gesteckt sind. An ihrem entgegengesetzten Ende sind die Kontaktkraftfedern 5 in Ausnehmungen 18 im Rücken der Kontaktlamellen 3 und 4 gelagert. Diese Ausnehmungen 18 sind mittig in den Kontaktlamellen 3 und 4, also in der Symmetrieachse derselben angeordnet.

Bei der Montage des Trennkontaktblockes 1 werden zunächst der Tragrahmen 6, Pakete von Kontaktlamellen 3 und 4 sowie Kontaktkraftfedern 5 bereitgestellt. Die Kontaktkraftedern 5 werden auf Zapfen 17 am Tragrahmen aufgesteckt. Danach werden die einzelnen Pakete von Kontaktlamellen 3 und 4 in die hierfür vorgesehenen Fenster 7 des Tragrahmens 6 jeweils derart eingeführt, daß die Ausnehmungen 18 am Rücken der Kontaktlamellen 3 und 4 den Kontaktkraftfedern 5 gegenüberstehen.

Dieser Vorgang ist ohne Kraftaufwand durchführbar. Anschließend werden die jeweiligen Pakete von Kontaktlamellen 3 und 4 durch eine Vorrichtung so weit auseinandergedrückt, daß das zweifach schräg abgewinkelte Lagerstück 2 mit seinem Mittelteil 9 auf den Tragrahmen 6 aufgelegt werden kann und in dieser Stellung die das Schwenklager 10 bildenden Kanten des Mittelteils des Lagerstücks 2 entsprechenden Ausnehmungen 13 und 14 auf der Kontaktseite der Kontaktlamellen 3 und 4 gegenüberstehen. Nach dem Vernieten des Tragrahmens 6 mit dem Lagerstück 2 und der Entnahme aus der Montagevorrichtung ist der Trennkontaktblock 1 fertiggestellt und einsatzfähig.

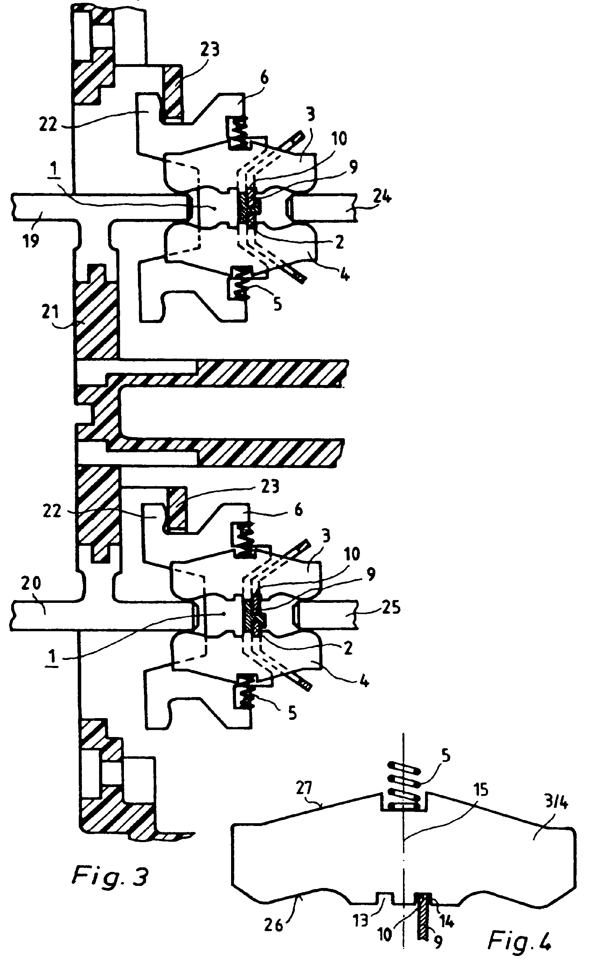

Die Fig.3 zeigt die räumliche Anordnung der Trennkontaktblökke 1 für die Anschlußstromschiene 19 und die Abgangsstromschiene 20 für einen nicht dargestellten Leistungschalter in einer Niederspannungs-Schaltanlage.

Hier ist in einer Schnittdarstellung die Kunststoff-Rückwand 21 eines Einschubrahmens einer Niederspannungs- Schaltanlage dargestellt. Auf die durch diese hindurchgeführten Anschluß- und Abgangsstromschienen 19; 20 sind die Trennkontaktblöcke 1 aufgeschoben und mittels eines am Tragrahmen 6 vorgesehenen Haltewinkels 22 hinter einem Befestigungselement 23 des Einschubrahmens verankert.

Dies geschieht einfach durch ein geneigtes Aufschieben des Trennkontaktblocks 1 auf die jeweilige Stromschiene 19 oder 20, wobei die Kontaktlamellen 3 oder 4 gegen die Kraft der Kontaktkraftfedern 5 um das Schwenklager geschwenkt werden und der Haltewinkel 22 hinter das Befestigungselement 23 des Einschubrahmens eingehakt wird. Danach wird der Trennkontaktblock 1 auf der Stromschiene 19; 20 in die Betriebsposition gebracht. Durch den Kontaktdruck der Kontaktlamellen 3 und 4 und das Einhaken des Haltewinkels 22 hinter das Befestigungselement 23 des Einschubrahmens ist der Trennkontaktblock 1 ausreichend fest angeordnet, um beim Einschieben eines Leistungsschalters dessen Anschlußschienen 24 und 25 aufzunehmen. Auch beim Ausfahren des Schalters ist der Trennkontaktblock 1 durch seine Verankerung mittels des Haltewinkels 22 hinter dem Befestigungselement 23 sicher gehalten.

In der Fig. 4 ist schematisch eine mögliche vorteilhafte Form einer Kontaktlamelle 3; 4 in der Seitenansicht dargestellt. Zur definierten asymmetrischen Lagerung ist diese auf ihrer Kontaktseite 26 mit Ausnehmungen 13 und 14 versehen, welche außerhalb der Symmetrieachse 15 der Kontaktlamelle 3; 4 vorgesehen sind. Im eingebauten Zustand umgreift die Kontaktlamelle 3;4 mit einer dieser Ausnehmungen 13 oder 14 das angedeutete Mittelteil 9 des Lagerstücks 2 und ist somit in dem dadurch gebildeten Schwenklager 10 schwenkbar arretiert. Auf der Rückseite 27 der Kontaktlamelle 3; 4 ist eine mittige Ausnehmung 18 vorgesehen, in welche die Kontaktkraftfedern 5 eingeführt werden.

Das Einsetzen von Trennkontaktblöcken in die bestehende Schaltanlage kann jederzeit erfolgen. Es ist folglich nur dann erforderlich Trennkontaktblöcke 1 in die Schaltanlage einzusetzen, wenn die entsprechende Position mit einem Leistungsschalter besetzt werden soll. Darüber hinaus zeichnet sich der erfindungsgemäße Trennkontaktblock durch eine geringe Anzahl von Teilen und eine unkomplizierte Montage aus.

## Patentansprüche

1. Trennkontaktblock (1) für Einschub-Leistungsschalter zur Verbindung beziehungsweise Trennung relativ zueinander bewegbarer Stromschienen (19, 20, 24, 25), bestehend aus einem Tragrahmen (6) und einem an diesem Tragrahmen befestigten Lagerstück (2), an dem parallel zueinander und relativ zueinander bewegbar brückenartige Kontaktlamellen (3, 4) angeordnet sind, die an ihren Enden Kontaktflächen zur Anlage an den zu verbindenden oder zu trennenden Stromschienen besitzen und die durch am Tragrahmen (6) abgestützte, die Kontaktlamellen (3; 4) in die Richtung zu ihrer Kontaktseite beaufschlagende Federn (5) gegen die Stromschienen (19, 20, 24, 25) vorgespannt sind, wobei jeweils zwei Kontaktlamellen (3, 4) zur Bildung paralleler Strombahnen einander gegenüberstehend angeordnet sind,
**dadurch gekennzeichnet,**
**dass** die Kontaktlamellen in einer Symmetrieachse (15) von den Federn (5) beaufschlagt sind und
**dass** das Lagerstück (2) ein Mittelteil (9) und zwei schräg abgewinkelte Arme (11) aufweist und mit Fenstern (7) versehen ist,
wobei die Fenster (7) jeweils von einer Kante am Mittelteil (9), einer Kante an einem Schenkelende einer der abgewinkelten Arme (11) und zwei Seitenwänden (8) gebildet sind und wobei mehrere der Kontaktlamellen (3; 4) jeweils als ein Paket derart in eines der Fenster (7) eingeführt sind, dass die Kante am Mittelteil (9) ein asymmetrisch gelegenes Schwenklager (10) für die Kontaktlamellen (3; 4), die Kante an den Schenkelenden der abgewinkelten Arme (11) eine Lagerkante zur Begrenzung des Schwenkwinkels der Kontaktlamellen (3; 4) und die Seitenwände (8) seitliche Führungen der Kontaktlamellen (3; 4) bilden.

2. Trennkontaktblock nach Anspruch 1,
**dadurch gekennzeichnet,**
**daß** der Tragrahmen (6) zur Befestigung des Trennkontaktblockes (1) in einem Einschubrahmen einer Schaltanlage Haltewinkel (22) aufweist.

3. Trennkontaktblock nach Anspruch 1,
**dadurch gekennzeichnet,**
**daß** der Tragrahmen (6) zur Sicherung der Kontaktkraftfedern (5) mit Zapfen (17) versehen ist.

4. Trennkontaktblock nach Anspruch 1,
**dadurch gekennzeichnet,**
**daß** das Lagerstück (2) mit dem rahmenartigen Tragrahmen (6) vernietet oder verstemmt ist.

5. Trennkontaktblock nach Anspruch 1,
**dadurch gekennzeichnet,**
**daß** die Kontaktkraftfedern (5) als Schraubenfedern ausgebildet sind.

6. Trennkontaktblock nach Anspruch 1,
**dadurch gekennzeichnet,**
**daß** jede Kontaktkraftfeder (5) je zwei nebeneinander angeordnete Kontaktlamellen (3; 4) beaufschlagt.

7. Trennkontaktblock nach Anspruch 1,
**dadurch gekennzeichnet,**
**daß** die Kontaktlamellen (3; 4) auf ihrer Kontaktseite mit Ausnehmungen (13; 14) versehen sind, die außerhalb der Symmetrieachse (15) der Kontaktlamellen (3; 4) angeordnet sind.

8. Trennkontaktblock nach Anspruch 1,
**dadurch gekennzeichnet,**
**daß** die Kontaktlamellen (3; 4) auf ihrer Rückseite (27) mittig in ihrer Symmetrieachse (15) angeordnete Ausnehmungen (18) zur Aufnahme und Führung der als Schraubenfedern ausgebildeten Kontaktkraftfedern (5) aufweisen.

## Claims

1. Isolating contact block (1) for withdrawable circuit breakers for connecting or isolating busbars (19, 20, 24, 25) which are capable of moving relative to one another, comprising a support frame (6) and a bearing piece (2), which is fastened on said support frame and on which link-like contact laminations (3, 4) are arranged in such a way that they are parallel to one another and are capable of moving relative to one another, which contact laminations have contact pads at their ends for bearing against the busbars to be connected or to be isolated and are prestressed against the busbars (19, 20, 24, 25) by springs (5), which are supported on the support frame (6) and act on the contact laminations (3, 4) in the direction towards their contact side, in each case two contact laminations (3, 4) being arranged opposite one another so as to form parallel current paths, **characterized in that** the contact laminations are acted on in an axis of symmetry (15) by the springs (5), and **in that** the bearing piece (2) has a central part (9) and two arms (11), which are bent back at an angle, and is provided with windows (7), the windows (7) each being formed by an edge on the central part (9), an edge on a limb end of one of the bent-back arms (11) and two side walls (8), and a plurality of the contact laminations (3, 4) in each case as a stack being introduced into one of the windows (7) in such a way that the edge on the central part (9) forms an asymmetrically positioned pivot bearing (10) for the contact laminations (3; 4), the edge on the limb ends of the bent-back arms (11) forms a bearing edge for delimiting the pivoting angle of the contact laminations (3; 4), and the side walls (8) form lateral guides for the contact laminations (3; 4).

2. Isolating contact block according to Claim 1, **characterized in that** the support frame (6) has retaining brackets (22) for fastening the isolating contact block (1) in a withdrawable-part rack of a switchgear assembly.

3. Isolating contact block according to Claim 1, **characterized in that** the support frame (6) is provided with pins (17) for securing the contact-force springs (5).

4. Isolating contact block according to Claim 1, **characterized in that** the bearing piece (2) is riveted or caulked to the frame-like support frame (6).

5. Isolating contact block according to Claim 1, **characterized in that** the contact-force springs (5) are in the form of helical springs.

6. Isolating contact block according to Claim 1, **characterized in that** each contact-force spring (5) acts on in each case two contact laminations (3; 4) which are arranged adjacent to one another.

7. Isolating contact block according to Claim 1, **characterized in that** the contact laminations (3; 4) are provided on their contact side with cutouts (13; 14), which are arranged outside the axis of symmetry (15) of the contact laminations (3; 4).

8. Isolating contact block according to Claim 1, **characterized in that** the contact laminations (3; 4) have cutouts (18), which are arranged on the rear side (27) of said contact laminations centrally in their axis of symmetry (15), for accommodating and guiding the contact-force springs (5) which are in the form of helical springs.

## Revendications

1. Bloc ( 1 ) de contacts de coupure pour disjoncteur à tiroir pour relier ou séparer des barres ( 19, 20, 24, 25 ) de courant pouvant se déplacer l'une par rapport à l'autre, constitué d'un cadre ( 6 ) porteur et d'une pièce ( 2 ) de palier, qui est fixée sur ce cadre porteur et sur laquelle sont montées parallèlement entre elles et mobiles les unes par rapport aux autres des lamelles ( 3, 4 ) de contact de type en pont, qui ont à leurs extrémités des surfaces de contact pour s'appliquer aux barres de courant à relier ou à séparer et qui sont pré-contraintes vers les barres ( 19, 20, 24, 25 ) de courant par des ressorts ( 5 ) s'appuyant sur le cadre ( 6 ) porteur et faisant aller les lamelles ( 3, 4 ) de contact dans le sens de leur côté de contact, respectivement deux lamelles ( 3, 4 ) de contact étant opposées l'une à l'autre pour former des voies de courant parallèles,
**caractérisé**
**en ce que** les lamelles de contact sont soumises aux ressorts ( 5 ) suivant un axe ( 15 ) de symétrie, et
**en ce que** la pièce ( 2 ) de palier a une partie ( 9 ) médiane et deux bras ( 11 ) inclinés et coudés et est munie de fenêtres ( 7 ),
les fenêtres ( 7 ) étant formées respectivement d'un bord de la partie ( 9 ) médiane, d'un bord d'une extrémité de branche de l'un des bras ( 11 ) coudés et de deux parois ( 8 ) latérales et plusieurs des lamelles ( 3, 4 ) de contact étant insérées respectivement sous la forme d'un paquet dans l'une des fenêtres ( 7 ) de façon à ce que le bord de la partie ( 9 ) médiane forme un palier ( 10 ) pivotant dissymétrique pour les lamelles ( 3, 4 ) de contact, le bord des extrémités de branche des bras ( 11 ) coudés, un bord de palier pour limiter l'angle de pivotement des lamelles ( 3, 4 ) de contact et les parois ( 8 ) latérales des guidages latéraux des lamelles ( 3, 4 ) de contact.

2. Bloc de contacts de séparation suivant la revendication 1,
**caractérisé**
**en ce que** le cadre ( 6 ) porteur a des équerres ( 22 ) de maintien pour la fixation du bloc ( 1 ) de contacts de séparation dans un cadre à tiroir d'une installation de distribution.

3. Bloc de contacts de séparation suivant la revendication 1,
**caractérisé en ce que** le cadre ( 6 ) porteur est muni de tenons ( 17 ) pour assurer les ressorts ( 5 ) de force de contact.

4. Bloc de contacts de séparation suivant la revendication 1,
**caractérisé en ce que** la pièce ( 2 ) de palier est rivetée ou matée au cadre ( 6 ) porteur.

5. Bloc de contacts de séparation suivant la revendication 1,
**caractérisé en ce que** les ressorts ( 5 ) de force de contact sont constitués sous la forme de ressorts hélicoïdaux.

6. Bloc de contacts de séparation suivant la revendication 1,
**caractérisé en ce que** chaque ressort ( 5 ) de force de contact s'applique à respectivement deux lamelles ( 3, 4 ) de contact disposées côte à côte.

7. Bloc de contacts de séparation suivant la revendication 1,
**caractérisé en ce que** les lamelles ( 3, 4 ) de contact sont munies sur leur côté de contact d'évidements ( 13, 14 ) qui sont disposés en dehors de l'axe ( 15 ) de symétrie des lamelles ( 3, 4 ) de contact.

8. Bloc de contacts de séparation suivant la revendication 1,
**caractérisé en ce que** les lamelles ( 3, 4 ) de contact ont sur leur côté ( 27 ) arrière des évidements ( 18 ) qui sont disposés au milieu dans leur axe ( 15 ) de symétrie et qui servent à recevoir et à guider les ressorts ( 5 ) de force de contact constitués sous la forme de ressorts hélicoïdaux.
